## Europäisches Patentamt
## European Patent Office
## Office européen des brevets

(19)

(11) Publication number: **0 167 393**
A2

(12) **EUROPEAN PATENT APPLICATION**

(21) Application number: **85304724.9**

(22) Date of filing: **02.07.85**

(51) Int. Cl.⁴: **B 01 J 29/28**
//C10G45/64

(30) Priority: **05.07.84 US 627991**
**27.11.84 US 675375**

(43) Date of publication of application:
**08.01.86 Bulletin 86/2**

(84) Designated Contracting States:
**AT BE DE FR GB IT NL SE**

(71) Applicant: **MOBIL OIL CORPORATION**
150 East 42nd Street
New York New York 10017(US)

(72) Inventor: **Anderson, Conroy Donald**
304 Lenape Trail
Wenonah New Jersey 08090(US)

(72) Inventor: **Dwyer, Francis Gerard**
1128 Talleyrand Road
West Chester Pennsylvania 19380(US)

(72) Inventor: **Cormier, William Edward, Jr.**
4140 Henhawk Court
Ellicott City Maryland 21043(US)

(72) Inventor: **Pasquale, Gary Michael**
141 Shire Drive
Sewell New Jersey 08020(US)

(72) Inventor: **Stover, William Albert**
336 South Belvidere Drive
Hampstead North Carolina 28443(US)

(74) Representative: **West, Alan Harry**
Mobil Court 3 Clements Inn
London WC2A 2EB(GB)

(54) Modified zsm-5 catalyst, and method of preparation and use thereof.

(57) Modified ZSM-5 catalyst is prepared by controlled aging,
preferably in a moving bed catalytic cracking unit. The
modified catalyst exhibits significant olefin isomerization
activity and reduced paraffin cracking activity.

EP 0 167 393 A2

Croydon Printing Company Ltd.

# MODIFIED ZSM-5 CATALYST, AND
## METHOD OF PREPARATION AND USE THEREOF

The invention relates to an improved ZSM-5 zeolite, its method of preparation, and use of the zeolite in hydrocarbon conversion processes.

Zeolitic materials, both natural and synthetic, have been demonstrated in the past to have catalytic properties for various types of hydrocarbon conversions. Certain zeolites are ordered, porous crystalline aluminosilicates having a definite crystalline structure within which there are a large number of smaller cavities which may be interconnected by still smaller channels. These materials are known as molecular sieves.

Many methods have been developed for preparing a variety of synthetic aluminosilicates. These aluminosilicates have come to be designated by letter or other symbol, e.g., Zeolite A (U.S. Patent No. 2,882,243), Zeolite X (U.S. Patent No. 2,882,244), Zeolite Y (U.S. Patent No. 3,130,007), and ZSM-5 (U.S. Patent No. 3,702,886).

ZSM-5 is a particularly interesting zeolite, and much work with ZSM-5 has been reported in the patent literature on adding an intermediate pore size zeolite, e.g., ZSM-5, to the conventional cracking catalyst. Use of large pore and small pore crystalline materials in catalytic cracking is known. Quite a lot of work has been done adding ZSM-5, and related intermediate pore size zeolites, to conventional large pore cracking catalyst.

In U.S. Patent No. 3,758,403, from 2.05 to 10% ZSM-5 catalyst was added to a conventional cracking catalyst containing 10% REY, the remainder being Georgia clay. Examples were given showing use of 1.5, 2.5, 5 and 10 wt % ZSM-5 added to the conventional cracking catalyst.

The ZSM-5 catalyst resulted in increased production of dry gas, some loss of gasoline yield, and an increase in octane number.

ZSM-5 catalyst, especially, virgin catalyst, has exceedingly high activity. Researchers have attempted to take advantage of the super activity of fresh ZSM-5 catalysts by adding only small amounts of it to FCC catalyst. Typical of such work is U.S. Patent No. 4,309,280 which taught adding very small amounts of powdered neat ZSM-5 catalyst, characterized by a particle size less than 5 microns.

This patent taught that adding as little as 0.25 wt % ZSM-5 powder to the circulating catalyst inventory in an FCC unit would increase dry gas production by 50% (from 3.9 wt % dry gas to 6.0 - see Example 6 in Table 2).

To summarize the state of the art regards addition of ZSM-5 to cracking catalyst, the following general statements can be made. ZSM-5 is exceedingly active, and addition of even small amounts results in greatly augmented production of dry gas, at the expense of gasoline yield.

So far as is known to applicants, no use has been made on a commercial or long term scale of ZSM-5 in moving bed catalytic cracking processes.

Experimental work has shown that ZSM-5 catalyst, in FCC processes, loses activity relatively quickly. ZSM-5 is disproportionately active, compared to conventional FCC catalyst, from startup up to perhaps as much as a week of operation. After more than about a week of operation in an FCC unit, and after being subjected to repeated fluidized bed regenerations, in laboratory or in commercial units, the ZSM-5 activity becomes much harder to find.

These factors, high initial activity of ZSM-5, coupled with rapid deactivation of ZSM-5, discouraged researchers from adding ZSM-5 to moving bed catalytic cracking units. The high startup activity of ZSM-5 results in voluminous production of light gases, which production is difficult to accommodate in downstream processing units designed to handle the product mix obtained from conventional catalyst. The rapid deactivation of ZSM-5 meant that its effect would soon be lost, requiring very expensive turnover of catalyst in the unit.

The problem of accommodating the initial high activity of ZSM-5 catalyst, has been solved, and is discussed hereafter.

The expected rapid catalyst deactivation, based on projections of work using ZSM-5 catalyst in FCC units, did not occur in TCC units.

The properties of the ZSM-5 catalyst changed after repeated regenerations in a moving bed cracking unit.

It was expected that the catalyst would lose activity. It did, but not nearly to the same extent as it did in conventional FCC catalyst regenerations.

Surprisingly, the ZSM-5 catalyst changed during use, and behaved differently than it ever had before. It did not just get older, it got better.

As the feeds are substantially the same in FCC and TCC, it is postulated that the different reaction/regeneration methods used in these processes might be the cause of the change in the ZSM-5 catalyst.

There is a difference in the severity and frequency of catalyst regeneration in TCC and FCC units.

FCC catalyst is frequently regenerated at temperatures of 650-732°C (1200-1350°F) in a fluidized bed regenerator. Any hydrogen, or hydrocarbon, present on the catalyst burns to produce water. The water, or steam, deactivates the ZSM-5 catalyst fairly rapidly.

In contrast, in Thermofor catalytic cracking regeneration, the catalyst is regenerated in a moving bed. Hydrogen and hydrocarbon tend to be burned off the catalyst and swept away from it before coke on the catalyst is burned, and before very high temperatures necessary to burn off coke are reached. In TCC regeneration the catalyst does not see water vapor for a very long time, and when it does see water vapor the catalyst is not very hot so the steaming deactivation effect is not so severe as in FCC.

Even making adjustments for the severity and frequency of FCC regenerations vs. TCC regenerations, the ZSM-5 catalyst after regeneration in a TCC unit behaved differently than ZSM-5 catalyst regenerated in an FCC unit.

After many days of operation in a TCC unit, the ZSM-5 catalyst became a better catalyst. Some activity was lost, but significant and unexpected amounts of catalytic activity remained. Most significant, the aged, TCC regenerated ZSM-5 catalyst retained most of the virtues expected of ZSM-5 catalyst (increased product octane number), while shedding most of the defects of ZSM-5 catalyst (loss in gasoline yield, increased dry gas make).

Accordingly, the present invention provides a crystalline material having the crystal structure of ZSM-5 which, when in contact with long chain relatively low octane olefins, at hydrocarbon conversion conditions sufficient to convert at least a portion of the olefins, exhibits as a primary conversion mechanism the isomerization of the long chain olefins to higher octane number materials.

In another embodiment, the present invention provides a catalytic cracking process operating in the absence of additional hydrogen, wherein hydrocarbon feedstock is contacted with a catalyst and the feedstock is cracked to lighter products, characterized by adding a crystalline material having the crystal structure of ZSM-5 and having a reduced paraffin cracking activity, and exhibiting substantial olefin isomerization activity, as compared to conventional ZSM-5 catalyst.

In yet another embodiment, the present invention provides modified ZSM-5 catalyst characterized by its method of preparation comprising contacting hydrocarbons with ZSM-5 catalyst initially having substantial initial paraffin cracking activity in a catalytic cracking zone to produce coked catalyst containing minor amounts of hydrocarbon and coke regenerating the coked catalyst in catalyst regeneration zone by the steps comprising burning a majority of the hydrocarbon from the catalyst, while leaving a majority of the coke on the catalyst removing most of the products of hydrocarbon combustion from contact with the catalyst and subsequently burning coke from the catalyst to produce a regenerated catalyst repeating steps a) and b) until the initial paraffin cracking ability of the ZSM-5 catalyst has been reduced by at least 50%.

ZSM-5

ZSM-5 is described in U.S. Patent Nos. 3,702,886 and Re 29,948.

Quite a lot of work has been done on making material with a ZSM-5 crystal structure, but with different materials, ranging from all silica to materials containing silica and some other tetravalent metal such as boron, iron, gallium, etc.

As used herein, the term ZSM-5 refers to a material which has substantially the same crystal structure as shown in U.S. Patent No. 3,702,886. Substitution of different cations, or changing the silica/alumina, or silica/boron ratio, may result in minor modifications of the X-ray diffraction patterns of the crystalline material so produced, but it is still ZSM-5, and contemplated for use herein.

## MOVING BED CATALYTIC CRACKING

This process was introduced in the early 1940's and a detailed description thereof is not believed necessary.

Briefly, the process uses a moving bed of catalytic cracking catalyst. Catalyst moves from the catalytic cracking reactor to a moving bed regenerator, and from there back to the reactor.

The oil chargestock to the process, usually without added hydrogen, is passed over the moving bed of catalyst and is catalytically cracked to lighter products. During catalytic cracking, the catalyst is deactivated by coke deposition. Coke deposition is removed from the catalyst in a moving bed regenerator associated with the moving bed cracking unit.

## MOVING BED REGENERATION

Moving bed catalytic cracking units have moving bed catalyst regeneration units associated therewith. The catalyst is generally maintained as a downflowing moving bed of catalyst. The catalyst may be disposed as an annular bed, with radial in or out gas flow. The moving catalyst bed may have the cross-section of a circle or a rectangle with gas flow from the lower portion of the catalyst bed to the upper, or the reverse. Alternatively, gas flow may be across the moving bed of catalyst, or some combination of cross-flow, downflow and upflow.

It is preferred to have a moving bed of catalyst going down, with gas flow generally in an upward direction.

Although the catalyst from the moving bed catalytic cracking unit is usually stripped before being sent to the regenerator, there is usually a small amount of hydrocarbon, and hydrogen containing coke, contained on the catalyst. This material is relatively easy to burn, and is usually burned from the catalyst in the top 5-10% of the moving bed catalyst regeneration unit. Usually more severe conditions are necessary to completely remove the more refractive, relatively hydrogen free coke that remains on the catalyst after hydrocarbons are burned off, so progressively more severe operating conditions are experienced in the lower portions of the moving bed. These conditions may be in the form of increased temperature, increased oxygen concentration, or both.

Much, if not all, of the heat required for catalyst regeneration is obtained by burning coke, and to a lesser extent, the light hydrocarbons that happen to be present on the catalyst. For start-up, or to adjust temperatures in the regenerator, an air preheater may be used. It is also possible to provide various heat exchange arrangements, e.g., incoming cool gas against hot exhaust gases, using hot exhaust gases to preheat catalyst, using hot regenerated catalyst as a source of incoming cool regeneration gas, etc. The conditions used in the moving bed catalyst regeneration units are highly conventional -- whatever temperatures, pressures, oxygen partial pressures have been found satisfactory in the past are believed to be satisfactory for use in the present invention.

In very general terms, regeneration conditions in the moving bed regeneration should be adjusted so that at least half of the $H_2O$ precursors are burned off and at least the top half of the bed, and preferably in the top 5-10% of the moving bed of catalyst in the catalyst regeneration zone. Conditions should not be severe enough to remove more than 50% of the coke from the catalyst in the top one half of the moving bed regeneration zone, and preferably 60 to 90% of the coke remains on the catalyst after the $H_2O$ precursors have been burned away.

Suitable regeneration conditions include temperatures of about 204-760°C (400-1400°F), preferably 427-649°C (800-1200°F).

Regeneration pressure may range from subatmospheric to 10 atmospheres or higher if desired. Usually regeneration is conducted at pressures slightly above atmospheric. Oxygen concentration may range from about 1/2 mole % oxygen to the oxygen content of air, or even higher if desired. Very high oxygen concentrations should be avoided as they lead to high catalyst regeneration temperatures which tend to deactivate the catalyst. Regeneration with 1 to 20 mole % oxygen is preferred.

No way is known today to duplicate this regeneration procedure in existing FCC units, although it may be possible to modify FCC regeneration procedures to achieve this, i.e., staged regeneration where most of the water precursors are burned off at low temperatures, before coke combustion.

It is believed that other methods will be developed to quickly produce ZSM-5 with the properties obtainable now only after weeks and months of aging and regeneration in a moving bed catalytic cracking unit.

## CATALYST PREPARATION BY REGENERATION

Modified ZSM-5 catalyst can be obtained by periodically replacing some of the circulating inventory of moving bed catalytic cracking catalyst, and processing the catalyst to recover the ZSM-5 catalyst, or simply using the extrudate catalyst (with or without additional modifiers, hydrogenation/ dehydrogenation components) for the desired catalytic use.

Preferably the aged ZSM-5 catalyst is obtained downstream of the moving bed catalyst regeneration process, where it is essentially coke free. It is also acceptable to obtain the ZSM-5 containing catalyst downstream of the reactor and upstream of the moving bed regeneration zone. If this is done, because of the presence of relatively large amounts of coke on the catalyst in such circumstance, it will usually be necessary to subject the catalyst to conventional regeneration techniques prior to use.

If TCC units are run to produce improved ZSM-5 catalyst, rather than improve TCC operation, some modifications to TCC operation may be permitted. Relatively high concentrations of ZSM-5 may be added, e.g., 10 to 100%, preferably 20 to 80, wt % ZSM-5 catalyst content may be used. The ZSM-5 catalyst added may have a smaller or larger particle size than the conventional catalyst, or a different L/D. The binder, or amorphous material used to give the catalyst strength and attrition resistance may be modified to optimize end use of the catalyst in some process other than TCC. Thus the binder may be inert, or all alumina, or some other material compatible with future catalytic use of the modified ZSM-5.

## HYDROCARBON CONVERSION PROCESSES

The ZSM-5 catalyst produced by the method of the present invention may continue to be used in moving bed catalytic cracking units with very good results.

The catalyst may also be used in any other hydrocarbon conversion process using catalyst. The ZSM-5 catalyst should be especially useful in catalytic dewaxing processes designed to reduce the pour point of fuel oils, or reduce the wax content of lubricating oil base stock.

The ZSM-5 catalyst of the present invention will also be very useful in hydrocracking, though in such service it is usually preferred to add a conventional hydrogenation/ dehydrogenation component.

## HYDROGENATION/DEHYDROGENATION COMPONENTS

Any of the conventional hydrogenation/dehydrogenation components heretofore added to zeolite or amorphous catalyst can be added to the ZSM-5 catalyst produced by the method of the present invention.

Suitable hydrogenation/dehydrogenation components include noble and base metals. Especially preferred among the noble metals are the Group VIII noble metals, especially platinum, palladium, and irridium. The noble metals may be present in an amount equal to 0.01 to 10 wt %, preferably 0.1 to 2 wt %, of the finished catalyst, on an elemental metal basis.

Base metal promoters may be used instead of noble metal promoters, or in conjunction with noble metal promoters. Base metal promoters consist of one or more elements selected from the metals of Group IVA and the base metals of Group VIII. Especially preferred are nickel, molybdenum, tungsten, nickel-moly, cobalt, and cobalt-moly.

Base metal promoters may be present in an amount equal to 1 to 25 wt %, and preferably 4 to 20 wt %, of the finished catalyst, calculated on an elemental metal basis.

## CATALYTIC PROPERTIES OF MODIFIED ZSM-5

ZSM-5 catalyst which has been modified by the process of the present invention is indistinguishable by any known X-ray or elemental analysis from conventional ZSM-5 catalyst.

Using the guidelines discussed hereafter, it is possible to take a ZSM-5 catalyst, and determine if it has been modified as disclosed in the present invention.

Conventional ZSM-5 catalyst, when added to conventional FCC catalyst, usually gives about 2 octane no. gain/1 LV % yield loss. In contrast, modified ZSM-5 catalyst of the present invention can give an octane no. gain with little or no yield loss. Conventional ZSM-5 catalyst results in significantly increased dry gas production, while this is not seen with the modified ZSM-5 catalyst of the present invention.

The modified ZSM-5 catalyst behaves differently from conventional ZSM-5 catalyst. Much of the ZSM-5's cracking activity is diminished, leading to reduced gas make and increased yield, at least in FCC units. It is believed that some paraffin cracking activity is lost.

Olefin isomerization activity is believed to be present. It is not exactly understood why ZSM-5 begins to exhibit olefin isomerization activity as it ages.

F-2909 (3107)                    -10-

The modified ZSM-5 catalyst obtained by TCC aging can be simulated, to some extent, by steaming under certain conditions prior to adding the zeolite to the catalytic reactor or the zeolite added to the catalytic reactor unit and exposed to steam as specified herein for a period of time sufficient to produce a modified selectivated catalyst.

The selectivated or modified zeolite can be injected at any time during the catalytic cracking process. The zeolite can be added in the same catalyst particle as the cracking component, in a separate catalyst particle, or as a particle consisting in part or totally of ZSM-5 type crystals. The selectivated zeolite can be introduced while the cracking unit is down, or while the cracking unit is on on-stream operation. Once the selectivated zeolite is added to the cracking process, the refiner can return to conventional operation or an operation at lower octane number by eliminating or decreasing the use of selectivated zeolite. Thus, the increase in octane number over the number obtainable under conventional cracking operations can be controlled by controlling the amount of selectivated zeolite.

The amount of selectivated zeolite required to increase gasoline octane number is generally based on the total quantity of conventional cracking catalyst in the unit, i.e., on the circulating inventory of conventional cracking catalyst. For example, if the selectivated zeolite is first introduced via the addition of fresh makeup catalyst, the amount of zeolite constituent in the additive catalyst required would be quite high if compared to the amount of fresh makeup catalyst added. However, after a period of time of fresh makeup catalyst addition, and once the amount of zeolite is maintained at the prescribed limtits as compared to the circulating inventory of conventional cracking catalyst, the amount of said zeolite in the fresh makeup catalyst addition will be much lower than initially.

The preferred zeolites are those having a constraint index of 1-12 in this invention include those having the structure of ZSM-5, ZSM-11, ZSM-12, ZSM-23, ZSM-35, ZSM-38, ZSM-48 and TMA Offretite, with ZSM-5 being particularly preferred.

The zeolites used in this invention may be in the hydrogen form or they may be base-exchanged or impregnated to contain a rare earth cation complement.  Such rare earth cations comprise Sm, Nd, Pr, Ce and La.  It is desirable to calcine the zeolite after base-exchange.

Catalysts containing selectivated zeolites may be prepared in various ways.  The catalyst may be separately prepared in the form of particles, such as pellets or extrudates, for example, and simply mixed in the required proporations.  The particle size of the individual component particles may be quite small, for example, from about 20 to about 150 microns, when intended for use in fluid bed operation, or they may be up to 1 cm for moving bed operation. Alternatively, the components may be mixed as powders and formed into pellets or extrudate, each pellet containing both components in substantially the required proporations.

The selectivation process is achieved by partial pressure steaming of ZSM-5 type zeolite for a period of time so that when admixed with conventional cracking catalyst the combined catalysts convert a hydrocarbon stream to a gasoline product having a high RON + 0 without a loss in gasoline plus distillate yield.  Generally, the zeolite is reacted with steam at a partial pressure of about 0 to 45 psig, at a temperature of from about 400° to 1600°F (205° to 870°C), preferably 800° to 1450° (430° to 790°C) for at least 5 hours, preferably not less than 10 hours, and most preferably between 10 and 60 hours.

The conditions for selectivating the zeolites may be interdependent upon one another.  If steaming at the lower end of the temperature range, the steaming time should be increased.

The following examples will serve to illustrate the selectivation process.

## Conventional Cracking Catalyst

The conventional cracking catalyst used as a comparative example and to which the selectivated zeolite catalyst was added is a commercially available FCC cracking catalyst FS-30 (Na = 0.56 wt %, $RE_2O_3$ = 2.97 wt %) produced by the Harshaw-Filtrol Corp, and was equilibrated through use in a commercial FCC unit. The active component of FS-30 is Y zeolite. In order to improve the stability of the catalyst, the zeolite is exchanged with a rare earth element, e.g., lanthanum, cerium, etc. Any rare earth oxide may be utilized in the catalyst; hence, the designation $RE_2O_3$ for rare earth oxide.

## Example 1

This example illustrates the improved performances of selectivated catalysts with increased steaming.

An additive catalyst containing ZSM-5 was prepared by spray drying 25 wt % ZSM-5 in a semi-synthetic $SiO_2/Al_2O_3$/clay matrix ($SiO_2/Al_2O_3$/clay = 79.05/5.95/15). The ZSM-5 containing catalyst was then steamed at 1350°F (732°C) and 1450°F (788°C) for 5, 10 and 15 hours in 45% steam/55% air, at atmospheric pressure. The steamed additive catalysts were then combined with the conventional cracking catalyst - equilibrium FS-30 - in proportions to yield catalysts containing 1% and 2% ZSM-5. The catalyst composite and the FS-30 catalyst (comparative example) were contacted with Joliet Sour Heavy Gas Oil (JSHGO, properties given in Table 1 below) in a fixed-fluidized bed bench unit at 960°F (515°C), 20 WHSV $hr^{-1}$, and catalyst/oil (cat/oil) ratio of 3. The results of the individual runs are given below in Table 2.

## TABLE 1

| Chargestock | Joliet Sour Heavy Gas Oil (JSHGO) |
|---|---|
| Gravity, °API | 24.3 |
| Density g/cc | 0.907 |
| Aniline Pt., °F/°C | 171/77 |
| Sulfur, wt % | 1.87 |
| Nitrogen, wt % | 0.10 |
| Basic Nitrogen, ppm | 327 |
| Conradson Carbon, wt % | 0.28 |
| Vicosity, KV at 210°F/99°C | 3.6 |
| Bromine No. | 4.2 |
| R.I. at 70°F/21°C | 1.5080 |
| Hydrogen, wt % | 12.3 |
| Molecular Weight | 358 |
| Pour Point, °F/°C | 85/30 |
| Parffins, wt % | 23.5 |
| Naphthenes, wt % | 32.0 |
| Aromatics, wt % | 44.5 |
| $C_A$, wt % | 18.9 |

The following abbreviations are used in the tables that follow:

RON +0 means Research Octane Number, with no tetraalkyl lead added.

Dry Gas means light hydrocarbons which are difficult to liquids, e.g., methane and ethane.

$\Delta C_5+$ gasoline means the change in liquid volume percent, of the amount of gasoline boiling range material produced from the hydrocarbon feed.

F-2909 (3107)  -14-

## TABLE 2

### 788°C Steaming

| Catalyst | Equil. FS-30 | FS-30 +1%ZSM-5 | FS-30 +2%ZSM-5 | FS-30 +1%ZSM-5 | FS-30 +2%ZSM-5 |
|---|---|---|---|---|---|
| **Steaming Condition** | | | | | |
| Time, Hrs @ 788°C | – | 5.0 | 5.0 | 10.0 | 10.0 |
| **Yields** | | | | | |
| Conversion, % Vol | 68.0 | 64.8 | 64.1 | 67.6 | 66.4 |
| $C_5^+$ Gasoline, % Vol | 53.0 | 49.5 | 48.5 | 52.6 | 51.7 |
| Total $C_4$'s, % Vol | 15.2 | 14.7 | 15.4 | 15.4 | 15.0 |
| Dry Gas, Wt % | 7.5 | 7.7 | 7.4 | 7.4 | 7.5 |
| Coke, Wt % | 4.2 | 3.9 | 4.0 | 4.0 | 4.0 |
| RON + O, $C_5^+$ Gasoline | 88.1 | 89.7 | 89.0 | 89.2 | 89.2 |
| Δ RON + O | – | +1.6 | +0.9 | +1.1 | +1.1 |
| Δ $C_5^+$ Gasoline Yield/ RON + O | – | -0.8 | -2.0 | -0.1 | -0.2 |

### 732°C Steaming

| Catalyst | Equil. FS-30 | FS-30 +1% ZSM-5 | FS-30 +2% ZSM-5 | FS-30 +1% ZSM-5 | FS-30 +2% ZSM-5 | FS-30 +1% ZSM-5 | FS-30 +2% ZSM-5 |
|---|---|---|---|---|---|---|---|
| **Steaming Condition** | | | | | | | |
| Time, Hrs @ 732°C | – | 5.0 | 5.0 | 10.0 | 10.0 | 15.0 | 15.0 |
| **Yields** | | | | | | | |
| Conversion, % Vol | 68.0 | 69.1 | 66.0 | 68.4 | 67.1 | 68.0 | 65.3 |
| $C_5^+$ Gasoline, % Vol | 53.0 | 52.7 | 48.3 | 49.5 | 47.5 | 51.2 | 49.6 |
| Total $C_4$'s, % Vol | 15.2 | 16.5 | 16.0 | 18.4 | 18.3 | 16.1 | 15.6 |
| Dry Gas, Wt % | 7.5 | 7.9 | 8.2 | 8.4 | 8.8 | 7.9 | 7.5 |
| Coke, Wt % | 4.2 | 4.7 | 5.0 | 4.2 | 4.4 | 4.3 | 3.9 |
| RON + O, $C_5^+$ Gasoline | 88.1 | 88.5 | 89.6 | 90.8 | 90.1 | 89.3 | 88.9 |
| Δ RON + O | – | +0.4 | +1.5 | +2.7 | +2.0 | +1.2 | +0.8 |
| Δ $C_5^+$ Gasoline Yield/ RON + O | – | -2.8 | -2.2 | -1.4 | -2.5 | -1.5 | -1.9 |

0167393

F-2909 (3107)                    -15-

### Example 2

The catalyst composite containing 1% ZSM-5 which had been steamed for 10 hours at 788°C (1450°F) was tested at a number of different conversions by varying the catalyst to oil ratio (cat/oil) at 516°C (960°F) using the unit and chargestock described with respect to Example 1.  Detailed run results are illustrated in Tables 3 and 4.  Estimates derived by interpolating the results of these runs to a constant conversion are illustrated in Table 5.

### TABLE 3

**Catalyst:  Equilibrium FS-30**

| Run Number | 1 | 2 | 3 | 4 | 5 | 6 | 7 | 8 |
|---|---|---|---|---|---|---|---|---|
| Conversion, % Vol | 75.3 | 74.0 | 72.7 | 69.3 | 68.8 | 67.4 | 66.4 | 65.7 |
| $C_5^+$ Gasoline, % Vol | 48.0 | 51.3 | 52.8 | 54.3 | 54.1 | 52.5 | 52.1 | 52.7 |
| Total $C_4$, % Vol | 19.7 | 19.4 | 18.4 | 15.8 | 16.0 | 14.9 | 14.8 | 14.0 |
| Dry Gas, Wt % | 12.0 | 9.9 | 8.9 | 7.3 | 6.9 | 7.3 | 7.4 | 7.4 |
| Coke, Wt % | 8.53 | 6.85 | 5.53 | 3.90 | 4.33 | 4.61 | 3.74 | 3.42 |
| n-$C_4$, % Vol | 2.1 | 2.2 | 1.8 | 1.3 | 1.3 | 1.1 | 1.0 | 1.0 |
| i-$C_4$, % Vol | 10.6 | 9.7 | 9.0 | 7.1 | 7.9 | 6.9 | 7.2 | 6.5 |
| $C_4^=$, % Vol | 7.0 | 7.5 | 7.7 | 7.3 | 6.8 | 6.9 | 6.6 | 6.5 |
| $C_3$, % Vol | 4.7 | 3.6 | 2.9 | 2.0 | 2.4 | 2.2 | 2.2 | 2.2 |
| $C_3^=$, % Vol | 9.2 | 7.8 | 7.6 | 6.8 | 5.4 | 6.4 | 7.0 | 6.6 |
| $C_5^+$ Gasoline + Alkylate, % Vol | 74.9 | 76.9 | 78.4 | 77.9 | 74.6 | 74.7 | 74.7 | 74.5 |
| Outside i-$C_4$, % Vol | 7.9 | 7.8 | 8.4 | 9.0 | 6.0 | 8.2 | 8.2 | 8.3 |
| RON + O, $C_5^+$ Gasoline | 89.1 | 88.8 | 88.8 | 88.0 | 88.4 | 87.6 | 88.6 | 88.0 |
| RON + O, $C_5^+$ Gasoline + Alkylate | 90.8 | 90.6 | 90.5 | 89.8 | 90.0 | 89.5 | 90.2 | 89.8 |

As used above, gasoline and alkylate means the amount of gasoline boiling range material that can be produced from the hydrocarbon feed.  It includes the gasoline boiling range liquids which can be produced from the light olefins, primarily $C_3$ and $C_4$ olefins, produced in the cat cracker.

## TABLE 4

Catalyst:  FS-30 + 1% ZSM-5

| Run Number | 1 | 2 | 3 | 4 | 5 |
|---|---|---|---|---|---|
| Conversion, % Vol | 75.2 | 73.5 | 69.3 | 67.6 | 66.7 |
| $C_5^+$ Gasoline, % Vol | 50.4 | 53.0 | 54.2 | 52.6 | 53.8 |
| Total $C_4$, % Vol | 21.5 | 17.6 | 14.9 | 15.4 | 14.3 |
| Dry Gas, Wt % | 10.6 | 9.5 | 8.3 | 7.4 | 7.3 |
| Coke, Wt % | 6.58 | 6.34 | 3.89 | 4.04 | 3.19 |
| n-$C_4$, % Vol | 2.4 | 1.7 | 1.2 | 1.3 | 1.0 |
| i-$C_4$, % Vol | 10.5 | 8.9 | 6.6 | 7.1 | 6.4 |
| $C_4$=, % Vol | 8.7 | 7.1 | 7.1 | 7.1 | 6.9 |
| $C_3$, % Vol | 3.7 | 3.3 | 2.1 | 2.2 | 2.0 |
| $C_3$=, % Vol | 8.6 | 7.9 | 7.9 | 6.6 | 6.8 |
| $C_5^+$ Gasoline + Alkylate, % Vol | 79.2 | 78.1 | 79.3 | 75.5 | 76.7 |
| Outside i-$C_4$, % Vol | 9.1 | 8.3 | 10.5 | 8.5 | 9.1 |
| RON + O, $C_5^+$ Gasoline | 91.0 | 0.0 | 89.3 | 89.2 | 88.9 |
| RON + O, $C_5^+$ Gasoline + Alkylate | 92.1 | 0.0 | 90.8 | 90.7 | 90.4 |

## TABLE 5

| | Equilibrium FS-30 | +1% Partial Pressure Steamed ZSM-5 |
|---|---|---|
| Conversion, % Vol | 72.0 | 72.0 |
| $C_5^+$ Gasoline, % Vol | 53.5 | 53.8 |
| Total $C_5$'s, % Vol | 10.1 | 10.1 |
| Total $C_4$'s, % Vol | 17.8 | 16.5 |
| Dry Gas, Wt % | 8.2 | 9.0 |
| Coke, Wt % | 5.5 | 5.4 |
| n-$C_4$, % Vol | 1.7 | 1.5 |
| i-$C_4$, % Vol | 8.6 | 7.8 |
| $C_4$=, % Vol | 7.5 | 7.2 |
| $C_3$, % Vol | 2.7 | 2.8 |
| $C_3$=, % Vol | 6.9 | 8.1 |
| $C_5^+$ Gasoline + Alkylate, % Vol | 77.5 | 79.2 |
| Outside i-$C_4$, % Vol | 7.8 | 9.6 |
| RON + O, $C_5^+$ Gasoline | 88.6 | 90.1 |
| RON + O, $C_5^+$ Gasoline + Alkylate | 90.3 | 91.4 |

## Example 3

This example illustrates the effect of long on-stream times and increased exposure to partial pressure steam of a catalyst selectivated in a cracking unit regenerator on the effect of octane number and gasoline yield of the product.

A sufficient quantity of the fresh 25% ZSM-5 additive catalyst prepared by the method of Example 1 was combined with equilibrium FS-30 to yield a 1% ZSM-5 catalyst composite. The composite was placed in a cyclic (integrated reactor-regenerator) cracking unit and operated at 970°F (521°C) riser top, 6-6.5 cat/oil, 2 second oil contact time while cracking Arab light gas oil (properties given below in Table 6). The regenerator conditions, where the ZSM-5 was exposed to partial pressure steam, were as follows:

| | |
|---|---|
| Temperature, °F (°C) | 1330  (721) |
| Pressure, psig (kPa) | 45  (412) |
| Steam, % | 5 to 15 |

Samples were withdrawn periodically from the cyclic unit and evaluated along with the conventional catalyst in the same fixed-fluidized bed unit under the conditions described in Example 1.

## TABLE 6

| | |
|---|---|
| Specific Gravity | .8774 |
| API° | 29.8 |
| Pour Point | 85°F/30°C |
| Cloud Point | 120°F/49°C |
| Viscosity KV at 100°C | 5.341 |
| Sulfur | 0.76 wt % |
| ASTM $Co/oR$ | *L1.0 |

*L=Less Than

## TABLE 7

| Catalyst | Equil. FS-30 | + 1% ZSM-5 | + 1% ZSM-5 | + 1% ZSM-5 | + 1% ZSM-5 |
|---|---|---|---|---|---|
| Time On-Stream | 0 hrs | 6 hrs | 20 hrs | 35 hrs | 58 hrs |
| Conversion, % Vol | 68.0 | 67.3 | 67.1 | 67.5 | 67.9 |
| $C_5^+$ Gasoline, % Vol | 53.0 | 49.3 | 52.1 | 51.4 | 53.0 |
| Total $C_4$'s, % Vol | 15.2 | 17.8 | 15.1 | 16.1 | 15.3 |
| Dry Gas, % Vol | 7.5 | 7.8 | 7.4 | 7.5 | 7.3 |
| Coke, Wt % | 4.2 | 4.3 | 4.1 | 4.3 | 4.2 |
| Hydrogen Factor | 93 | 127 | 143 | 168 | 175 |
| $i-C_4$, % Vol | 7.2 | 7.8 | 6.2 | 6.6 | 6.7 |
| $C_4=$, % Vol | 6.8 | 8.7 | 7.5 | 8.2 | 7.5 |
| $C_3$, % Vol | 2.3 | 2.0 | 1.8 | 1.8 | 1.9 |
| $C_3=$, % Vol | 6.6 | 7.8 | 7.4 | 7.3 | 7.0 |
| $C_5^+$ Gasoline + Alkylate, % Vol | 75.4 | 77.0 | 77.0 | 77.2 | 77.1 |
| $C_5^+$ $i-C_4$, % Vol | 8.1 | 10.9 | 10.7 | 10.9 | 9.7 |
| RON + O, $C_5^+$ Gasoline | 88.1 | 90.6 | 91.0 | 90.4 | 90.1 |
| RON + O, $C_5^+$ Gasoline + Alkylate | 89.9 | 91.9 | 92.0 | 91.7 | 91.4 |

F-2909 (3107)                    -19-

## Example 4

In this example, the basic procedure of Example 3 was followed, with the exception that the cracking catalyst was admixed with ZSM-5 to yield a 2.5 wt % ZSM-5 composite catalyst. The cracking catalyst used for this Example, designated 75-F Equilibrium, is a commercial FCC cracking catalyst produced by the Harshaw-Filtrol Corp. and equilibrated in a commercial FCC unit. Catalyst 75-F compares to catalyst FS-30, described previously, in cracking function. The composite catalysts were contacted with JSHGO, charged to a cyclic cracking unit operating at 940°F (504°C) riser top temperature, 4-6 Cat/Oil ratio, and 2 second oil contact time. Regenerator conditions, where the ZSM-5 was exposed to partial pressure steam, were 1330°F (720°C), K Pa (45 psig) and 5-15% steam. A sample was removed from the cyclic unit after 250 hours and evaluated along with the conventional cracking catalyst in the fixed fluidized bed unit under conditions descrxibed in Example 2. Detailed results are presented in Tables 8 and 9. Estimated results, corrected to constant conversion, are presented in Table 10.

0167393

F-2909 (3107)   ·   -20-

## TABLE 8

Catalyst: 75-F Equilibrium

| Run Numbers | 1 | 2 | 3 | 4 | 5 | 6 |
|---|---|---|---|---|---|---|
| Cat/Oil | 5.0 | 4.0 | 3.0 | 2.5 | 2.0 | 1.75 |
| Conversion, % Vol | 70.0 | 67.3 | 59.5 | 53.9 | 48.1 | 43.8 |
| $C_5^+$ Gasoline, % Vol | 54.8 | 54.5 | 50.4 | 46.7 | 42.4 | 39.1 |
| Total $C_4$, % Vol | 15.3 | 14.2 | 11.6 | 9.5 | 8.4 | 7.4 |
| Dry Gas, Wt % | 7.5 | 6.7 | 5.4 | 4.7 | 4.1 | 3.8 |
| Coke, Wt % | 4.8 | 3.7 | 2.8 | 2.6 | 2.1 | 1.9 |
| i-$C_4$, % Vol | 6.6 | 5.8 | 4.3 | 3.5 | 2.6 | 2.2 |
| $C_4$=, % Vol | 7.2 | 7.1 | 6.3 | 5.3 | 5.0 | 4.5 |
| $C_3$=, % Vol | 6.9 | 6.3 | 5.2 | 4.6 | 4.0 | 3.6 |
| $C_5^+$ Gasoline + Alkylate, % Vol . | 78.5 | 76.8 | 69.6 | 63.3 | 57.5 | 52.6 |
| Outside i-$C_4$, % Vol | 9.5 | 9.3 | 8.7 | 7.7 | 7.5 | 6.9 |
| RON + O, $C_5^+$ Gasoline | 88.5 | 88.4 | 87.6 | 87.7 | 88.2 | 88.0 |
| RON + O, $C_5^+$ Gasoline + Alkylate | 90.2 | 90.1 | 89.4 | 89.4 | 89.8 | 89.6 |
| LFO, Wt % | 27.3 | 29.1 | 34.0 | 36.5 | 39.6 | 41.5 |
| HFO, Wt % | 5.0 | 5.8 | 8.2 | 10.7 | 13.2 | 15.1 |
| G + D, Wt % | 72.7 | 74.6 | 76.1 | 75.7 | 75.1 | 74.3 |

As used above, LFO means Light Fuel Oil and HFO means Heavy Fuel Oil.

G + D means Gasoline plus Distillates.

F-2909 (3107)                    -21-

## TABLE 9

Catalyst:  2.5% ZSM-5 in Eq. 75-F (After 250 Hrs in Cyclic Unit)

| Run Numbers | 1 | 2 | 3 | 4 |
|---|---|---|---|---|
| Cat/Oil | 5.0 | 4.0 | 3.0 | 2.5 |
| Conversion, % Vol | 63.1 | 56.7 | 49.5 | 47.7 |
| $C_5^+$ Gasoline, % Vol | 51.0 | 47.0 | 43.2 | 41.2 |
| Total $C_4$, % Vol | 13.0 | 11.0 | 8.7 | 9.1 |
| Dry Gas, Wt % | 6.5 | 5.6 | 4.4 | 4.2 |
| Coke, Wt % | 3.6 | 2.9 | 2.2 | 2.0 |
| i-$C_4$, % Vol | 4.6 | 3.4 | 2.5 | 2.3 |
| $C_4$=, % Vol | 7.4 | 6.7 | 5.5 | 6.2 |
| $C_3$=, % Vol | 6.3 | 5.4 | 4.2 | 3.9 |
| $C_5^+$ Gasoline + Alkylate, % Vol | 73.9 | 67.4 | 59.6 | 58.1 |
| Outside i-$C_4$, % Vol | 10.8 | 10.3 | 8.5 | 9.0 |
| RON + 0, $C_5^+$ Gasoline | 89.4 | 89.0 | 90.5 | 88.6 |
| RON + 0, $C_5^+$ Gasoline + Alkylate | 90.9 | 90.6 | 91.5 | 90.3 |
| LFO, Wt % | 32.8 | 36.1 | 39.1 | 40.9 |
| HFO, Wt % | 6.2 | 8.9 | 12.4 | 12.2 |
| G + D, Wt % | 75.2 | 75.3 | 75.3 | 75.6 |

## TABLE 10

| Catalyst: | 75-F | +2.5% ZSM-5 | 75-F | +2.5% ZSM-5 |
|---|---|---|---|---|
| Time in Cyclic Unit, Hrs. | - | 250 | - | 250 |
| Conversion, % Vol | 50.0 | 50.0 | 60.0 | 60.0 |
| $C_5^+$ Gasoline, % Vol | 44.0 | 43.0 | 50.3 | 49.2 |
| Total $C_4$, % Vol | 8.7 | 9.2 | 11.6 | 11.9 |
| Dry Gas, Wt % | 4.3 | 4.6 | 5.5 | 6.1 |
| Coke, Wt % | 2.2 | 2.2 | 3.1 | 3.2 |
| i-$C_4$, % Vol | 2.9 | 2.6 | 4.4 | 4.0 |
| $C_4$=, % Vol | 5.1 | 6.0 | 6.2 | 7.0 |
| $C_3$=, % Vol | 4.1 | 4.3 | 5.3 | 5.9 |
| $C_5^+$ Gasoline + Alkylate, % Vol | 59.5 | 60.3 | 69.5 | 70.7 |
| Outside i-$C_4$, % Vol | 7.6 | 9.1 | 8.6 | 10.5 |
| RON + O, $C_5^+$ Gasoline | 88.0 | 89.4 | 88.1 | 89.3 |
| RON + O, $C_5^+$ Gasoline + Alkylate | 89.6 | 90.8 | 89.8 | 90.8 |
| LFO, Wt % | 38.7 | 39.3 | 33.5 | 34.3 |
| HFO, Wt % | 6.2 | 8.9 | 12.4 | 12.2 |
| G + D, Wt % | 75.6 | 75.4 | 75.6 | 75.2 |

Example 5

In this example, the procedure of Example 4 was followed with the exception that the composite catalyst was combined with ZSM-5 to yield a 3.5 wt % ZSM-5 composite catalyst. Samples were withdrawn periodically from the cyclic unit and evaluated in the same manner as Example 4. Estimated results, corrected to constant conversion, are presented in Tables 11 and 12.

## TABLE 11

| Catalyst | 75-F | +3.5% ZSM-5 | | | | |
|---|---|---|---|---|---|---|
| Time in Cyclic Unit, Hrs | - | 4 | 144 | 328 | 496 | 600 |
| Conversion, % Vol | 50.0 | 50.0 | 50.0 | 50.0 | 50.0 | 50.0 |
| $C_5^+$ Gasoline, % Vol | 44.0 | 35.3 | 40.1 | 41.1 | 41.1 | 42.5 |
| Total $C_4$, % Vol | 8.7 | 14.5 | 10.6 | 10.2 | 9.0 | 9.0 |
| Dry Gas, Wt % | 4.3 | 7.5 | 5.4 | 5.1 | 5.1 | 4.7 |
| Coke, Wt % | 2.2 | 2.5 | 2.6 | 2.7 | 2.9 | 2.6 |
| $i$-$C_4$, % Vol | 2.9 | 3.9 | 3.0 | 3.0 | 2.6 | 2.6 |
| $C_4$=, % Vol | 5.1 | 9.8 | 6.9 | 6.6 | 5.7 | 5.8 |
| $C_3$=, % Vol | 4.1 | 9.5 | 5.7 | 5.4 | 4.9 | 4.5 |
| $C_5^+$ Gasoline + Alkylate, % Vol | 59.5 | 67.6 | 61.1 | 61.0 | 59.1 | 59.7 |
| Outside $i$-$C_4$, % Vol | 7.6 | 17.9 | 11.2 | 10.5 | 9.4 | 9.0 |
| RON + O, $C_5^+$ Gasoline | 88.0 | 92.3 | 90.4 | 90.6 | 90.1 | 90.0 |
| RON + O, $C_5^+$ Gasoline + Alkylate | 89.6 | 93.1 | 91.7 | 91.8 | 91.4 | 91.2 |
| LFO, Wt % | 38.7 | - | 40.1 | 39.0 | 40.1 | 39.4 |
| HFO, Wt % | 12.3 | - | 11.1 | 12.2 | 10.9 | 12.0 |
| G + D, Wt % | 75.6 | - | 74.0 | 73.3 | 75.1 | 74.8 |

F-2909 (3107)                    -24-

## TABLE 12

| Catalyst | 75-F | +3.5% ZSM-5 | | | | |
|---|---|---|---|---|---|---|
| Time in Cyclic Unit, Hrs | - | 4 | 144 | 328 | 496 | 600 |
| Conversion, % Vol | 60.0 | 60.0 | 60.0 | 60.0 | 60.0 | 60.0 |
| $C_5^+$ Gasoline, % Vol | 50.3 | 39.4 | 46.6 | 47.6 | 48.6 | 48.3 |
| Total $C_4$, % Vol | 11.6 | 18.5 | 13.4 | 13.3 | 11.8 | 11.8 |
| Dry Gas, Wt % | 5.5 | 10.2 | 7.0 | 6.4 | 6.2 | 6.0 |
| Coke, Wt % | 3.1 | 3.6 | 3.7 | 3.4 | 4.0 | 3.6 |
| i-$C_4$, % Vol | 4.4 | 6.5 | 4.6 | 4.4 | 3.8 | 3.8 |
| $C_4$=, % Vol | 6.2 | 10.8 | 7.8 | 8.0 | 7.1 | 7.0 |
| $C_3$=, % Vol | 5.3 | 12.4 | 7.3 | 7.0 | 6.0 | 5.8 |
| $C_5^+$ Gasoline + Alkylate, % Vol | 69.5 | 78.0 | 71.8 | 72.6 | 70.5 | 69.8 |
| Outside i-$C_4$, % Vol | 8.6 | 19.7 | 12.4 | 12.5 | 11.0 | 10.7 |
| RON + O, $C_5^+$ Gasoline | 88.1 | 92.3 | 90.4 | 90.7 | 90.7 | 90.1 |
| RON + O, $C_5^+$ Gasoline + Alkylate | 89.8 | 93.1 | 91.7 | 91.9 | 91.8 | 91.4 |
| LFO, Wt % | 33.5 | - | 33.4 | 33.3 | 33.5 | 34.1 |
| HFO, Wt % | 8.3 | - | 8.2 | 8.5 | 8.0 | 8.5 |
| G + D, Wt % | 75.6 | - | 72.4 | 72.9 | 74.1 | 74.1 |

### Example 6

This example illustrates the effect of short oil-to-catalyst contact time on a selectivated catalyst composite. The selectivated catalyst of Example 3 and the conventional catalyst (FS-30 - for comparison) were contacted with another chargestock (properties given in Table 13) in the following manner. The catalyst was heated to about 1300°F (704°C) and contacted with oil in a 3.5-4.0 cat/oil ratio. The catalyst and oil mixture passed through a reactor heated to 1000°F (537°C) while in contact for approximately 1 second. Detailed data from the runs are presented in Tables 14 and 15. Estimated results at constant conversion, based upon the data illustrated in Tables 14 and 15, are presented in Table 16.

## TABLE 13

Properties

| | |
|---|---|
| Gravity, API at 60°F (16°C) | 33.3 |
| Specific Gravity | 0.8586 |
| Pour Point, °F/°C | 105/41 |
| KV at 40°C, Centistokes | 11.58 |
| KV at 100°C, Centistokes | 3.098 |
| Sulfur, Wt % | 0.133 |
| Nitrogen, Total, ppm | 170 |
| Nitrogen, Basic, ppm | 85 |
| Hydrogen, Wt % | 13.62 |
| Aniline Point, °F/°C | 204.7/96 |
| Bromine Number | 2.9 |

## TABLE 14

Catalyst:  Equilibrium FS-30

| Run Numbers | 1 | 2 | 3 | 4 | 5 | 6 | 7 | 8 |
|---|---|---|---|---|---|---|---|---|
| Conversion, % Vol | 51.8 | 54.3 | 57.6 | 59.3 | 60.3 | 60.7 | 62.9 | 63.3 |
| $C_5^+$ Gasoline, % Vol | 41.6 | 43.1 | 45.6 | 46.7 | 46.4 | 47.4 | 49.8 | 50.5 |
| Total $C_4$, % Vol | 10.0 | 10.3 | 10.2 | 10.9 | 11.1 | 12.0 | 10.7 | 10.8 |
| Dry Gas, Wt % | 5.7 | 6.3 | 7.3 | 6.6 | 7.7 | 6.7 | 7.3 | 6.2 |
| Coke, Wt % | 2.03 | 2.18 | 2.39 | 2.48 | 2.57 | 2.52 | 3.18 | 3.23 |
| $n$-$C_4$, % Vol | 0.9 | 1.0 | 0.2 | 1.3 | 1.0 | 1.1 | 0.9 | 1.1 |
| $i$-$C_4$, % Vol | 2.4 | 2.3 | 3.7 | 2.5 | 2.3 | 3.0 | 2.8 | 2.5 |
| $C_4=$, % Vol | 6.7 | 7.0 | 6.3 | 7.1 | 7.8 | 7.9 | 7.1 | 7.2 |
| $C_3$, % Vol | 1.0 | 1.0 | 1.7 | 1.1 | 1.2 | 1.2 | 1.4 | 1.0 |
| $C_3=$, % Vol | 4.7 | 5.2 | 7.3 | 5.7 | 5.1 | 5.8 | 5.6 | 5.5 |
| $C_5^+$ Gasoline + Alkylate, % Vol | 60.7 | 63.4 | 66.7 | 68.1 | 69.6 | 70.2 | 71.0 | 71.8 |
| Outside $i$-$C_4$, % Vol | 10.5 | 11.4 | 10.7 | 11.8 | 13.3 | 12.3 | 11.5 | 11.8 |
| RON + O, Raw Gasoline | 89.0 | 0.0 | 0.0 | 88.5 | 88.5 | 88.5 | 0.0 | 89.2 |
| RON + O, $C_5^+$ Gasoline | 88.6 | 0.0 | 0.0 | 87.6 | 87.7 | 88.0 | 0.0 | 88.1 |
| RON + O, $C_5^+$ Gasoline + Alkylate | 90.4 | 0.0 | 0.0 | 89.7 | 89.9 | 90.1 | 0.0 | 89.9 |

## TABLE 15

Catalyst: Equilibrium FS-30 + 1 wt % ZSM-5

| Run Numbers | 1 | 2 | 3 | 4 | 5 | 6 | 7 | 8 |
|---|---|---|---|---|---|---|---|---|
| Conversion, % Vol | 42.6 | 52.2 | 57.9 | 60.6 | 61.2 | 62.9 | 63.7 | 67.5 |
| $C_5^+$ Gasoline, % Vol | 34.2 | 41.0 | 44.8 | 46.4 | 48.3 | 49.3 | 48.8 | 51.7 |
| Total $C_4$, % Vol | 8.3 | 9.2 | 11.2 | 10.7 | 13.0 | 12.3 | 12.1 | 13.6 |
| Dry Gas, Wt % | 5.2 | 5.2 | 7.5 | 7.8 | 5.3 | 6.5 | 8.2 | 7.3 |
| Coke, Wt % | 1.40 | 3.09 | 2.53 | 2.57 | 3.01 | 3.19 | 2.97 | 4.05 |
| $n-C_4$, % Vol | 0.9 | 1.0 | 0.2 | 0.9 | 1.1 | 1.2 | 0.4 | 1.0 |
| $i-C_4$, % Vol | 1.7 | 2.1 | 4.2 | 3.0 | 3.3 | 3.0 | 4.2 | 3.4 |
| $C_4=$, % Vol | 5.7 | 6.0 | 6.8 | 6.7 | 8.7 | 8.1 | 7.6 | 9.2 |
| $C_3$, % Vol | 0.8 | 0.9 | 2.1 | 1.5 | 1.0 | 1.1 | 1.9 | 1.4 |
| $C_3=$, % Vol | 4.1 | 4.2 | 5.8 | 6.3 | 4.8 | 5.7 | 6.9 | 6.0 |
| $C_5^+$ Gasoline + Alkylate, % Vol | 50.6 | 58.2 | 65.9 | 68.2 | 70.9 | 72.5 | 73.0 | 77.1 |
| Outside $i-C_4$, % Vol | 9.3 | 9.4 | 10.1 | 11.7 | 11.8 | 12.6 | 12.2 | 13.6 |
| RON + O, Raw Gasoline | 88.8 | 88.9 | 91.1 | 0.0 | 0.0 | 89.4 | 91.1 | 89.7 |
| RON + O, $C_5^+$ Gasoline | 88.2 | 88.2 | 91.2 | 0.0 | 0.0 | 88.5 | 91.3 | 89.4 |
| RON + O, $C_5^+$ Gasoline + Alkylate | 90.2 | 90.1 | 92.2 | 0.0 | 0.0 | 90.4 | 92.2 | 91.1 |

## TABLE 16

| Catalyst | FS-30 | FS-30 +1%ZSM-5 | FS-30 | FS-30 +1%ZSM-5 |
|---|---|---|---|---|
| Conversion, % Vol | 55.0 | 55.0 | 60.0 | 60.0 |
| $C_5^+$ Gasoline, % Vol | 43.4 | 42.9 | 47.0 | 46.6 |
| Total $C_4$'s, % Vol | 10.5 | 10.2 | 11.0 | 11.4 |
| Dry Gas, Wt % | 6.6 | 6.2 | 7.1 | 6.7 |
| Coke, Wt % | 2.1 | 2.5 | 2.6 | 2.9 |
| n-$C_4$, % Vol | 0.8 | 0.7 | 0.9 | 0.8 |
| i-$C_4$, % Vol | 2.7 | 3.0 | 2.9 | 3.3 |
| $C_4$=, % Vol | 6.9 | 6.4 | 7.2 | 7.3 |
| $C_3$, % Vol | 1.2 | 1.4 | 1.3 | 1.5 |
| $C_3$=, % Vol | 5.6 | 5.1 | 5.9 | 5.6 |
| $C_5^+$ Gasoline + Alkylate, % Vol | 64.3 | 62.4 | 69.1 | 68.2 |
| Outside i-$C_4$, % Vol | 11.3 | 10.0 | 12.0 | 11.2 |
| RON + O, $C_5^+$ Gasoline | 87.9 | 89.7 | 87.7 | 89.9 |
| RON + O, $C_5^+$ Gasoline + Alkylate | 90.0 | 91.1 | 89.9 | 91.3 |
| Mix Temperature, °F | 1035 | 1057 | 1071 | 1079 |

## Selectivation Discussion

Example 1 compares runs conducted with a conventional cracking catalyst to runs in which the ZSM-5 type zeolite component was treated at 1450°F and 1350°F with partial pressure steam and combined with the conventional cracking catalyst to give 1 and 2% ZSM-5 composite catalysts. The efficiency of octane gain, as measured by $C_5^+$ gasoline yield/ RON + 0, was calculated by adjusting yields with the ZSM-5 additive-containing catalyst to the conversion obtained with the conventional cracking catalyst, using a 0.7 incremental gasoline efficiency ($C_5^+$ gasoline yield/conversion). No attempt was made to adjust octane, since its sensitivity to the small changes in conversion involved is slight. Referring to the first chart in Table 2, the steaming of the ZSM-5 type additive at 788°C shows the improved yield-octane performance. The catalyst composites which contain the ZSM-5 additive steamed 10 hours increased octane by 1 RON + 0 with essentially no loss in yield. The 5 hour steamed ZSM-5 additive is not selectivated as much as the 10 hour one as evidenced by the larger yield losses associated with the octane gains.

The ZSM-5 additive was also steam treated at 732°C (1350°F) (lower chart of Table 2). When the ZSM-5 additive was steamed under these less severe conditions, cracking performance was more nearly similar to that achieved with a fresh catalyst, i.e., a $C_5^+$ gasoline yield/RON + 0 value of about -2.0. There is some indication from the 1% ZSM-5 composites at the 10 and 15 hour steaming times that longer steaming at these conditions may result in improved gasoline yield/octane performance, perhaps approaching that achieved with the 732°C steamings.

The gasoline octane-selectivity plot, determined from the data in Tables 3 and 4, and the estimated yields at constant conversion as illustrated in Table 5 show that the ZSM-5 composite has equivalent selectivity and higher octane over a wide conversion range, compared to the conventional cracking catalyst. Compared to the conventional cracking catalyst, the ZSM-5 composite improves octane by 1-2 RON + 0 over the conversion range studied, with the higher advantage occurring at high conversion (high cat/oil) in the overcracking region.  At peak gasoline yields, the advantage is about 1.5 RON + 0.  Coke selectivity of the ZSM-5 catalyst is about equivalent to that of the conventional cracking catalyst.  The ZSM-5 catalyst also shows a propensity to produce more dry gas, particularly propylene, and less $C_4$'s than the conventional cracking catalyst.  The ZSM-5 has a tendency to produce a higher fraction of light olefins, compared to saturates of the same carbon number.  This suggests that the ZSM-5 composite catalyst may alkylate or aromatize these olefins, thereby maintaining the gasoline yield and improving octane.  Because ZSM-5 produced more propylene and less isobutane in Example 2, it allows for 1.5-2.0% volume higher potential alkylate yield, but requires 1.5-2.0% volume more outside isobutane to accomplish the alkylation.  Thus, Example 2 illustrates that the use of a selectivated ZSM-5 FCC additive can improve the gasoline octane number by about 1.5 RON + 0 without sacrificing yield.

Referring now to Example 3, it can be seen from Table 7 that, after 6 hours cracking time on stream, ZSM-5 shows a gasoline octane increase of 2.5 ROM + 0 at the expense of a 3.2% volume loss in $C_5^+$ gasoline yield, after adjusting for conversion.  Gas make, particularly $C_3$ and $C_4$ olefins and i-$C_4$, increased while coke make remains essentially constant.  As the ZSM-5 catalyst became more selectivated, the yield patterns changed and improved. The ZSM-5 catalyst was selectivated by exposure to partial pressure steam at elevated temperatures in the regenerator.  As time on stream increased, the gasoline yield of the ZSM-5 containing catalyst increased and the gas make decreased while maintaining a 2-3 gasoline RON-0 advantage, as compared to the conventional cracking catalyst.  At the conclusion of the testing, i.e., at 58 hours, the ZSM-5 containing catalyst had virtually the same gasoline and gas make in the fixed fluidized bed testing as the base catalyst and provided a 2.0 gasoline RON + 0 improvement. There was a shift in the gas make with ZSM-5 toward the production of the $C_3$ and $C_4$ olefins, with a corresponding decrease in the yield of saturates of the same number. While not wishing to be restricted to any one theory, it is believed that the greater light olefin fraction indicates that the gasoline with the ZSM-5 containing catalyst is more olefinic or that the ZSM-5 can act on the higher light olefin concentration to produce a higher octane gasoline by alkylation or aromatization.

Additional studies were conducted at the 2.5 (Example 4) and 3.5 (Example 5) wt % level of ZSM-5. The estimated results for the 2.5 wt % ZSM-5, as illustrated in Table 10, show octane increased 1-1.5 RON + 0 and gasoline plus distillate (G + D) wt % yields were essentially the same, as compared to the conventional cracking catalyst.

As illustrated in Tables 11 and 12, the estimated results for 3.5 wt % ZSM-5, corrected to constant conversion, show initially (4 hours on stream) that ZSM-5 raised octane by 4.2 RON + 0, but decreased $C_5^+$ gasoline yield by 10% volume. However, at long on-stream times and increased exposure to partial pressure steam, octane increased 2 RON + 0 and G + D loss declined to essentially zero.

With reference now to Example 6, and particularly Table 16, it can be seen that the conventional cracking catalyst with 1 wt % ZSM-5 exhibits a 2.0 RON + 0 advantage over the conventional cracking catalyst alone, with only a slight loss in gasoline yield in a short contact time fluid transport unit. From the estimates shown in Table 16, and the gasoline selectivity-octane (data accumulated from Tables 14 and 15), the 2.0 RON + 0 advantage is apparent with a drop in gasoline selectivity of 0.4% volume over a wide range of conversions near the distillate operating mode. The mix temperature is slightly higher for the ZSM-5-conventional cracking catalyst composite, indicating a slightly lower activity, but the difference is not large enough to be responsible for octane gain.  Thus, the octane gain with only a slight yield loss for the selectivated conventional cracking catalyst/ZSM-5 composite was significant in a short contact time fluid transport unit.

Additional examples will now be presented which show the preferred catalyst modification procedure, namely aging in a commercial TCC unit.

EXAMPLE 7

This process was tested in a commercial size TCC unit. Operating conditions are shown below:

| | |
|---|---|
| Fresh Feed Rate, m$^3$/S | 2.45 x 10$^{-2}$ |
| Fresh Feed Rate, BPD | 13,400 |
| Recycle | 0 |
| Catalyst Circulation, tons/hr | 397 |
| Catalyst Circulation, metric tons/hr | 360 |
| Catalyst/Oil | 4.44 wt/wt |
| Reactor Vapor Outlet Temp. | 903°F/484°C |
| Catalyst Activity (CAT-D) | 53.8 |

This unit had a 315 metric ton (347 ton) catalyst inventory.

The conventional catalyst in the unit had the following specifications.

Durabead 10A

Wt % REY                     12.0%
Bead Diameter                0.36-0.70 cm

      The changeover catalyst had the following properties:

Wt % ZSM-5                   5%
Wt % REY                     7.5%
Bead Diameter                0.36-0.70 cm

      During normal operation, this unit required makeup catalyst rates of 1.13 metric tons (1.25 tons) per day. The makeup catalyst rate is set to satisfy those catalyst losses due to attrition, and also to maintain catalyst activity.

      Catalyst addition was usually maintained at 1.8 metric tons (2 tons) per day, although there were short periods of addition rates as high as 3.6 metric tons (4 tons) per day.

      Results of the test are reported hereafter in Table 1.

      Feed properties are reported hereafter. The numbers reported are approximate because the feed was a blend of different crudes, and the blend varied somewhat.

F-2909 (3107)

## Feed Properties

### Test Results

| Test | Test Method | Results |
|------|-------------|---------|
| Pour Point, °C/°F | D 97 | 29/85 |
| Carbon Residue Conradson | D 189 | 0.31 |
| Kinematic Viscosity 40C | D 445-3 | 40.55 |
| Kinematic Viscosity 100C | D 445-5 | 5.922 |
| Aniline Point | D 611 | 164.5 |
| Bromine No. | D1159 | 6.8 |
| Refractive Index Liquids | D1218-9 | 1.49000 |
| API Gravity | D1298-3 | 23.0 |
| Density, g/cc | | 0.916 |
| Molecular Weight | | 353 |
| Sulfur by XRF, 0.002-5% | | 1.65 |
| Hydrogen-Micro Pregl. | | 12.37 |
| Nickel by AA | | 0.25 ppm |
| Vanadium by AA | | 0.70 ppm |
| Iron by AA | | 3.15 ppm |
| Copper by AA | | 0.10 ppm |
| Sodium by AA | | 2.95 ppm |
| Nitrogen-Microdumas | | .16% |

### REDUCED PRESSURE DISTILLATION, D1160

| % (Vol) Over | °C/°F @ 760 mm |
|--------------|----------------|
| IBP | 220/428 |
| 5 | 324/615 |
| 10 | 352/665 |
| 20 | 381/718 |
| 30 | 399/750 |
| 40 | 416/781 |
| 50 | 431/808 |
| 60 | 446/835 |
| 70 | 463/865 |
| 80 | 484/903 |
| 90 | 510/950 |
| 95 | 528/983 |
| EP | 532/990 |

NOTE: IBP = Initial Boiling Point
EP = End Point

TABLE 7

Reactor Effluent Surveys

| | | | | |
|---|---|---|---|---|
| Time on Stream, Days | 0 | 72 | 92 | 106 |
| Added Catalyst, tons | 0 | 125 | 177 | - |
| Metric tons | 0 | 113 | 161 | - |

Reactor Effluent Test Results[1]

| | | | delta | | delta | | delta |
|---|---|---|---|---|---|---|---|
| Conversion, % Vol | 53.0 | 53.0 | | 53.0 | | 53.0 | |
| $C_5^+$ Gasoline, % vol. | 42.3 | 40.9 | -1.4 | 40.1 | -2.2 | 43.6 | +1.3 |
| $C_4^-$, % wt | 12.5 | 14.1 | +1.6 | 13.6 | +1.1 | 12.2 | -0.3 |
| $C_4^=$, % vol | 3.8 | 4.6 | +0.8 | 4.6 | +0.8 | 4.2 | +0.4 |
| $C_3^=$, % vol | 3.7 | 4.7 | +1.0 | 4.8 | +1.1 | 4.2 | +0.5 |
| Potential Alkylate, % vol | 12.7 | 15.7 | +3.0 | 15.9 | +3.2 | 14.2 | +1.5 |
| Add'l $i$-$C_4$'s req'd | 4.1 | 6.2 | +2.1 | 6.1 | +2.0 | 5.5 | +1.4 |
| $LFO^2$, % vol | 29.9 | 29.1 | -0.8 | 29.3 | -0.6 | 26.4 | -3.5 |
| Octane No. - $R+O^3$ | 86.0 | 90.2 | +4.2 | 90.5 | +4.5 | 91.2 | +5.2 |
| - $M+O^4$ | 77.4 | 79.2 | +1.8 | 79.6 | +2.2 | 79.5 | +2.1 |

[1] Normalized to same conversion and feed properties
[2] LFO = Light Fuel Oil
[3] R+O = Research Octane Number, with no lead addition
[4] M+O = Motor Octane Number, with no lead addition.

T: circulating catalyst had, on average, slightly less than
2.5 wt % ZSM-5. Although roughly half the catalyst inventory had been
dumped, incrementally, and replaced with changeover catalyst which was
rich in ZSM-5, some of the catalyst that was dumped had ZSM-5 in it
from previous additions.

Conventional catalyst addition continued after a 2.5 wt % ZSM-5
level had been obtained. This was primarily to make up for normal
attrition losses. This catalyst addition averaged roughly about 0.5%
per day of catalyst inventory. This make-up catalyst added had no
ZSM-5 added. The reason for this was that no more ZSM-5 containing
catalyst happened to be available at that site.

## Example 8 - Laboratory Evaluation

A laboratory test was conducted using a ZSM-5 catalyst in a
standard laboratory test apparatus designed to simulate a moving bed
cracking operation.

## Feedstock Properties

The feedstock was a gas oil fraction having the approximate
properties reported earlier.

## Changeover Catalyst

The changeover catalyst used in the laboratory test was
essentially the same as the changeover catalyst used in the commercial
test.

The catalyst addition scheme used was designed to rapidly bring
the ZSM-5 content of the circulating or equilibrium catalyst to the
desired level well before 72 days of operation.

Laboratory Evaluation of Catalyst Samples

| Days | 0 | 72 | delta | 92 | delta | 106 | delta | 158 | delta | 226 | delta |
|---|---|---|---|---|---|---|---|---|---|---|---|
| Conversion, % vol | 50 | 50 | - | 50 | - | 50 | - | 50 | - | 50 | - |
| Gasoline, % vol | 41.6 | 39.6 | -2.0 | 39.8 | -1.7 | 38.8 | -2.7 | 40.9 | -0.7 | 41.5 | -0.1 |
| $C_4^=$, % vol | 2.9 | 3.5 | +0.6 | 3.5 | +0.6 | 3.7 | +0.8 | 3.3 | +0.4 | 3.0 | +0.1 |
| $C_3^=$, % vol | 3.0 | 4.1 | +1.1 | 4.1 | +1.1 | 4.3 | +1.3 | 3.7 | +0.7 | 3.8 | +0.8 |
| Pot. Alkylate, % vol | 9.9 | 12.9 | +3.0 | 12.9 | +3.0 | 13.5 | +3.6 | 12.0 | +2.1 | 11.6 | +1.7 |
| Add'l i-$C_4$'s Req'd, % vol | 2.8 | 4.2 | +1.4 | 4.0 | +1.2 | 4.3 | +1.5 | 4.1 | +1.3 | 4.0 | +1.2 |
| Octane No. - R+O | 83.5 | 85.5 | +2.0 | 85.5 | +2.0 | 85.7 | +2.2 | 84.5 | +1.0 | 84.1 | +0.6 |

F-2909 (3/07)

0167393

## A POSSIBLE EXPLANATION - OLEFIN ISOMERIZATION

It is believed that this modified ZSM-5 catalyst has acquired
the ability to isomerize olefins. The theory can be stated as follows:

In order to fully explain these test results the chemistry of
octane enhancement being promoted by the ZSM-5 catalyst must first be
understood. ZSM-5 increases gasoline octane in catalytic cracking by
cracking linear low octane components in the heavy end of the gasoline
to lighter and more branched components. Such a mechanism is adequate
to explain the performance during the addition of fresh ZSM-5 catalyst.
Nevertheless we must also consider the residual octane enhancement
observed after fresh catalyst addition has been ended. Based upon
gasoline compositional data obtained independent of this commercial
test ZSM-5 is now known to isomerize low octane linear olefins to more
highly branched and higher octane olefins.

We believe the activity enhancement catalyzed by fresh ZSM-5
catalyst addition is dominated by the first reaction, paraffin
cracking. As the catalyst ages in the unit and equilibrates the
latter reaction mechanism, olefin isomerization, dominates as the
cracking activity decreases, hence the residual octane enhancement
activity observed.

Our test on a commercially sized unit of ZSM-5 addition gave
initial octane gains (3.5-4.5 RON+O and 2.0-2.5 MON+O) with
corresponding gasoline losses of 2.0-2.5% vol and $C_3^= + C_4^=$
increases of 3.0-4.0% vol. There were no substantial increases in
coke make observed. The increase in $C_3^= + C_4^=$ together with
additional outside $i-C_4$ can be translated into increases in alkylate
yield of 3.0-3.5% vol. The octane enhancement decayed at a relatively
slow rate after ZSM-5 addition has been terminated indicating that
ZSM-5 octane enhancement shifted from paraffin cracking to olefin
isomerization. The cracking of low octane components in the heavy
gasoline end is dominant with fresh catalyst while olefin isomerization
dominates as the catalyst ages in the TCC units.

If we wanted to improve the operation of a moving bed catalytic cracking unit by the addition of ZSM-5 to it, we would replace 1-2% per day of the circulating catalyst inventory with a ZSM-5 rich catalyst containing 1-10 wt % ZSM-5. ZSM-5 catalyst addition would continue until the circulating catalyst inventory contained the desired ZSM-5 content.

To obtain modified ZSM-5 catalyst for use in other units, we would add a ZSM-5 makeup catalyst that had much higher levels of ZSM-5, typically 10 to 100 wt %, preferably 20-50 wt % ZSM-5. This may not be the optimal addition scheme as far as the moving bed catalytic cracking unit is concerned, but it would be the best way of making modified ZSM-5 catalyst in a moving bed cracking unit that had to keep running.

The ZSM-5 rich catalyst added to a TCC may be made with a slightly different particle size, or L/D, or geometry, permitting eventual separation and recovery of modified ZSM-5 catalyst from circulating catalyst inventory.

CLAIMS:

1.   A crystalline material having the crystal structure of
ZSM-5 which, when in contact with long chain relatively low octane
olefins, at hydrocarbon conversion conditions sufficient to convert at
least a portion of the olefins, exhibits as a primary conversion
mechanism the isomerization of the long chain olefins to higher octane
number materials.

2.   Crystalline material of Claim 1 characterized in that
addition of catalytically effective amounts of the ZSM-5 to the
inventory of a catalytic cracking unit operating in the absence of
added hydrogen, results in a 2.0 increase in research clear octane
number for every one liquid volume percent loss of $C_5^+$ gasoline
yield.

3.   Crystalline material of Claim 1 characterized in that the
ZSM-5 has been repeatedly regenerated in a moving bed catalyst
regeneration zone.

4.   Crystalline material of any of Claims 1 to 3 in an
amorphous support which also contains 1 to 30 wt % large pore zeolite.

5.   Crystalline material of any of Claims 1 to 4 in an
amorphous support wherein the ZSM-5 comprises 1 to 10 wt % of the
total weight thereof.

6.   Crystalline material of any of Claims 1 to 4 wherein the
ZSM-5 comprises 10 to 100 wt % ZSM-5 in an amorphous binder.

7.   Crystalline material of any of Claims 1 to 3 wherein the
ZSM-5 comprises about 20 to 50 wt % ZSM-5 and 80 to 50 wt % amorphous
binder.

8.   In a catalytic cracking process operating in the absence of additional hydrogen, wherein hydrocarbon feedstock is contacted with a catalyst and the feedstock is cracked to lighter products, the improvement comprising adding a crystalline material having the crystal structure of ZSM-5 and having a reduced paraffin cracking activity, and exhibiting substantial olefin isomerization activity, as compared to conventional ZSM-5 catalyst.

9.   Modified ZSM-5 catalyst characterized by its method of preparation comprising:

a) contacting hydrocarbons with ZSM-5 catalyst initially having substantial initial paraffin cracking activity in a catalytic cracking zone to produce coked catalyst containing minor amounts of hydrocarbon and coke;

b) regenerating the coked catalyst in catalyst regeneration zone by the steps comprising:

(i) burning a majority of the hydrocarbon from the catalyst, while leaving a majority of the coke on the catalyst;

(ii) removing most of the products of hydrocarbon combustion from contact with the catalyst and subsequently;

(iii) burning coke from the catalyst to produce a regenerated catalyst.

c) repeating steps a) and b) until the initial paraffin cracking ability of the ZSM-5 catalyst has been reduced by at least 50%.

10.   A process for modifying ZSM-5 catalyst comprising:

a) adding ZSM-5 catalyst to a moving bed catalytic cracking unit containing a moving bed catalyst regeneration zone; and

b) operating the moving bed catalytic cracking unit for at least one month to produce a modified ZSM-5 catalyst with reduced paraffin cracking activity, while exhibiting olefin isomerization activity.

11. A process for catalytically cracking a hydrocarbon feedstock in a catalytic cracking unit to a product comprising gasoline using a cracking catalyst comprising a conventional catalytic cracking catalyst and a zeolite additive having a Constraint Index between 1 and 12 and a silica-to-alumina ratio greater than 10, characterized by steaming said zeolite at a temperature of 200 to 870°C for a time sufficient to modify the cracking characteristics of the cracking catalyst to increase the octane number of the gasoline without substantially decreasing the gasoline plus distillate yield.

12. The process of Claim 11, wherein the zeolite additive has the crystal structure of ZSM-5, ZSM-11, ZSM-12, ZSM-23, SZM-35, ZSM-38, ZSM-48 and TMA Offretite.

13. The process of Claim 11, wherein the zeolite has the crystal structure of ZSM-5.

14. The process of any of Claims 11 to 13, wherein the zeolite contains essentially no alumina.

15. The process of any of Claims 11 to 14, wherein the zeolite is treated with steam at 575-770°C in a regenerator associated with the cracking unit.

16. The process of any of Claims 11 to 14, wherein the zeolite additive is exposed to steam prior to being added to the cracking unit.

17. The process of any of Claims 11 to 16, wherein the zeolite additive comprises from 0.01 to 10 wt % of the total cracking catalyst.

18.    The process of Claim 16, wherein the zeolite is
treated with steam at a pressure of 101 kPa to 412 kPa for at least
5 hours.

6738H/0469H